# EUROPEAN PATENT SPECIFICATION

(11) **EP 1 601 717 B1**
(45) Date of publication and mention of the grant of the patent: **27.06.2007**
(21) Application number: 04707532.0
(22) Date of filing: 03.02.2004
(51) Int. Cl.: C08K 5/00, C08K 5/42, C08K 5/55, C08L 27/02

(54) **USE OF SALTS OF SUPERACIDS AS STABILISER IN VINYL HALIDE POLYMERS**
VERWENDUNG VON SALZEN VON SUPERSÄUREN ALS STABILISATOR IN VINYLHALOGENIDPOLYMEREN
UTILISATION DE SELS DE SUPERACIDES EN TANT QUE STABILISATEURS DANS DES POLYMERES DE HALOGENURE DE VINYLE

(30) Priority: 14.02.2003 US 447740 P; 30.05.2003 EP 03076681
(43) Date of publication of application: 07.12.2005
(73) Proprietor: Chemson Polymer-Additive AG, 9601 Arnoldstein (AT)
(72) Inventor: VAN ES, Daniël, Stephan, NL-6721 RP Bennekom (NL); HUISMAN, Hendrik, Willem, NL-6367 BZ Voerendaal (NL); VAN HAVEREN, Jacco, NL-6717 XB Ede (NL); VAN DER KOLK, Johannes, Cornelis, NL-6866 CA Heelsum (NL); KLAESS, Peter, 07973 Greiz (DE)
(74) Representative: Viering, Jentschura & Partner
(86) International application number: PCT/EP2004/001015
(87) International publication number: WO 2004/072166

(56) References cited:
- JP-A- 54 163 508
- US-A- 4 178 282

## Description

The present invention relates to the use of salts of superacids as colour and/or heat stabilisers for vinyl halide polymers, and to polyvinyl halide resin compositions comprising said salts of superacids.

As is generally known, polymers and copolymers of vinyl chloride are utilised for the manufacture of various shaped articles by moulding, extrusion, and casting processes. In these processes high temperatures up to 180-200°C are required in order to bring the polymer to a sufficiently soft state. At these temperatures, polymers based on vinyl chloride undergo considerable degradation, which results in discoloration and a decrease in their mechanical properties. Moreover, upon use of the shaped articles, discoloration and loss of properties occur as well. In order to minimise these adverse changes or effects, PVC has traditionally been stabilised with colour and/or heat stabilisers. Conventional stabilisers include but are not limited to β-diketones, β-triketones, β-keto-esters, their enamines, dihydropyridines, and uracil derivatives. EP-A-0 881 253 lists some of these conventional stabilisers. Further stabiliser compositions are disclosed in for example EP-A-0 362 012, EP-A-0 049 699, and EP-A-0 005 678. EP-A-0 362 012 discloses a stabiliser composition which comprises at least one β-diketone, at least one hydrotalcite, and at least one dihydropyridine. A polyol is mentioned as further optional stabiliser component. EP-A-0 049 699 mentions a combination of a β-aminocrotonate and a dihydropyridine as heat stabiliser for polyvinyl chloride. However, most β-aminocrotonates have the disadvantage that ammonia is released at higher temperatures. Very often Zn-containing compounds are used as co-stabilisers to provide good stabilisation properties. Lately, there has been an interest in reducing the amount of Zn compounds in PVC. However, Zn-free stabilisation systems often are not satisfactory with respect to the early colour and colour-hold of plastic articles. Numerous references also disclose stabiliser compositions comprising large amounts of heavy metal-containing stabilisers, such as cadmium and/or lead compounds. However, these heavy metals are considered to pose a risk to health and the environment.

It is therefore an object of the present invention to provide stabiliser compositions which do not comprise these large amounts of heavy metals and which, at the same time, show good thermal stability and good colour stability. Surprisingly, we have now found that superacids and metal salts of superacids can be used as heat and colour stabilisers in vinyl halide polymers.

Accordingly, the invention relates to the use of at least one Brønsted superacid or metal salt of a Brønsted superacid as a heat and/or colour stabiliser for polyvinyl halide resin compositions. In addition, the present invention relates to heat-stabilised polyvinyl halide resin compositions comprising a certain amount of at least one Brønsted superacid or metal salt of a superacid.

The name superacid for acid systems more acidic than the traditional mineral acids was first used by J.B. Conant in 1927. Subsequently, R.J. Gillespie introduced an arbitrary but nowadays generally accepted definition according to which superacids are systems whose acidity, as characterised by the Hammett acidity function *H₀,* exceeds that of 100% sulfuric acid (*H₀* = -12). The acidities of Brønsted superacidic systems have been obtained or estimated using different experimental techniques such as UV-Vis, NMR, and kinetic methods. Due to substantial experimental and theoretical difficulties, well-defined p*K*ₐ values of Brønsted superacids are not available for the aqueous solution, and in some cases the uncertainties of those values exceed several powers of 10. The acidity of the superacid is most conveniently measured in the gas phase. Gas-phase acidities (GA) of a neutral acid HA and proton affinities (PA(A⁻)) of the anionic base A⁻ refer to the following equilibrium: 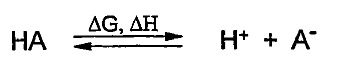 where gas-phase acidity *ΔG_{acid}* ≡ GA ≡ Δ*G* and Δ*H*_{acid} ≡ PA(A⁻) ≡ Δ*H*. By definition, the gas-phase acidity of a neutral acid HA is equal to the gas-phase basicity toward the proton of its conjugate anion, A⁻. I.A. Koppel, R.W. Taft and co-workers in J. Am. Chem. Soc. 1994, 116, 3047-3057, describe an extensive equilibrium scale of intrinsic gas-phase acidities of a large number of very strong Brønsted acids which was established using the FT-ICR technique. This particular scale lists the intrinsic acidities of more than 20 CH, NH, and OH acids which because of their absolute acidity are stronger than H₂SO₄. For superacids of which the gas-phase acidity cannot be measured due to experimental problems, the gas-phase acidity *ΔG_{acid}* can be calculated. For example, I.A. Koppel et al. in J. Am. Chem. Soc. 2000, 122, 5114-5124, describe how the gas-phase acidities of neutral Brønsted acids can be obtained from DFT and *ab initio* studies.
Most of the large variety of superacidic systems and various derivatives of superacids are of great importance in electrochemical applications such as fuel cells, lithium batteries, or electric double-layer capacitors.

It is noted that PVC compositions comprising metal salts of superacids are already known in the literature. JP-A-227743, for example, describes the use of at least 1 part of lithium salts of superacids per 100 parts of PVC resin to obtain a transparent vinyl-chloride resin which has high electroconductivity. As the lithium salt of superacid for instance (F₃CSO₂)₂NLi is employed.
US 5,252,413 discloses the use of LiClO₄ and the imide of trifluoromethylsulphonic acid to make a conductive PVC suitable for use as a solid polymer electrolyte in Li batteries. The electrolyte contains between 5 and 15 weight-percent of the alkali metal salt.

These references do not disclose or suggest that metal salts of superacids are efficient colour and/or heat stabilisers of PVC. Furthermore, the metal salts of superacids are present in large quantities in the PVC composition, which is not only uneconomical, but what is more, because of the presence of these high quantities, said compositions will not be able to resist the high temperatures used by moulding, extrusion, and casting processes.

Superacids suitable for use according to the present invention are those which have a gas-phase acidity ΔG_{acid} value of 316 kcal/mol or less. More preferably, the gas-phase acidity ΔG_{acid} value is less than 312 kcal/mol, even more preferably less than 307 kcal/mol, and most preferably less than 302 kcal/mol.

In order to determine whether a superacid is suitable for use as a heat and/or colour stabiliser according to the invention, preferably the gas-phase acidity (gas-phase ΔG_{acid}) of superacids is measured. In a particularly preferred embodiment, the gas-phase acidity of the superacid is determined as described by I.A. Koppel, R.W. Taft and co-workers in J. Am. Chem. Soc. 1994, 116, 3047-3057. If there are experimental problems, the acidity is preferably determined using conventional calculation techniques. Preferably, the acidity is calculated using DFT and/or *ab initio* calculations as for example described by I.A. Koppel et al. in J. Am. Chem. Soc. 2000, 122, 5114-5124.

Suitable metal salts of superacids preferably do not include perchlorates and/or compounds of the formula 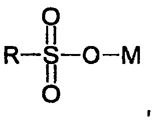 wherein M is a metal, preferably selected from the group consisting of alkali metals, alkali earth metals, Al, and transition elements, and R is selected from the group consisting of substituted, linear or branched, alkyl, cycloalkyl, aryl, alkaryl, and aralkyl moieties, the substituents comprising at least one or more electron-withdrawing groups. Anions of superacids according to the invention are weakly co-ordinating to the metal ion in the metal salt. Preferably, the anion is selected from the group consisting of carborane anion (CB₁₁H₁₂⁻), partially or fully substituted anions of the type (CB₁₁XₙH₍₁₂₋ₙ₎⁻), wherein each X independently is a halogen, an alkyl group or a halogenated alkyl group, bis(oxalato)borate anion (BOB), (2,4,6-(NO₂)₃C₆H₂O⁻) (picrate anion), linear or cyclic imides of the type (F₂ₙ₊₁CₙSO₂)₂N⁻, fluorinated tetraphenylborates such as tetrakis(3,5-bis(trifluoromethyl)phenyl)borate anion (BArF⁻) or perfluorotetraphenylborate, and polyfluoro-alkoxyaluminate anions. As the skilled person will understand, the F groups in the above-mentioned anions can also (partially) be replaced by other electron-withdrawing groups.
Preferably, the anion of the superacid is selected from the group consisting of (CF₃SO₂)₂N⁻ (bis(trifluoromethylsulphonyl) imide, TFSI), carborane, partially or fully substituted carborane anions, and BOB.

The metal ion in the metal salt of a superacid according to the present invention is preferably selected from the group consisting of alkali metals, alkali earth metals, transition metals, lanthanide metals, actinide metals, Al, Ga, In, Ti, Ge, Sn, Pb, and Sb. Particularly preferred metal ions are metal cations with a high charge density and small ionic radius, because this makes them efficient Lewis acids. In a particularly preferred embodiment, the metal is lithium, sodium, magnesium, calcium, lanthanum, cesium or barium. The most preferred metal ion is lithium.

As mentioned above, it is possible to employ one metal salt of a superacid, but mixtures of two or more metal salts of superacids may be employed as heat and/or colour stabilisers as well. Preferably, a single metal salt of a superacid is used. Moreover, the superacids according to the present invention can be used as such as heat and/or colour stabilisers for polyvinyl halide resins, instead of in the form of the corresponding metal salt. More than one superacid can be employed as the heat and/or the colour stabiliser, but the use of one single superacid is preferred. The most preferred superacids which can be used include but are not limited to (CF₃SO₂)₂NH (HTFSI), CB₁₁H₁₃, and CB₁₁XₙH₍₁₃₋ₙ₎, because these superacids are solids, which makes them relatively easy to handle.

In a particularly preferred embodiment, metal salts of superacids are used which are chemically inert towards the resin composition. Preferably, linear or cyclic imides of the type (F₂ₙ₊₁CₙSO₂)₂NLi, Li carborane, or Li CB₁₁XₙH₍₁₂₋ₙ₎ are used. Most preferably, (CF₃SO₂)₂NLi is employed. In another preferred embodiment, because of environmental reasons metal salts of superacids are employed which are free of halogens. Particularly preferred are LiBOB and Li carborane.

The superacids and the corresponding metal salts suitable for use according to the present invention can be produced in conventional ways. Carborane anions, and partially or fully substituted carborane anions, are for instance conveniently prepared according to the methods described in WO 02/079210 or by S. Moss et al. in Organic Letters, 2001, 3, 2375-2377 LiBOB can for instance be obtained following the preparation method described by W. Xu and C.A. Angell in Electrochemical and Solid-State Letters, 2001, 4, E1-E4, or according to the procedure described in DE-C-198 29 030. For example, US 6,107,493 describes a method for the preparation of cyclic perfluoroalkane-bis(sulfonyl)imides.

The amount of superacid(s) or metal salt(s) of superacid(s) needed to obtain an effect is generally very low. For the purpose of this invention, an effect is considered to be present if the heat and/or the colour stability of the stabilised resin is better than in a corresponding composition without the stabiliser. Preferably, the maximum amount of stabiliser does not exceed 0.95 parts, more preferably 0.25 parts, and most preferably 0.10 parts, based on 100 parts of polyvinyl halide resin. Preferably, an amount of at least 0.0001 parts, more preferably at least 0.001 parts, and most preferably at least 0.005 parts, all based on 100 parts of polyvinyl halide resin, is employed.

It is noted that a beneficial effect can be achieved on early colour and/or long-term colour hold when in addition to the superacid(s) or metal salt(s) of superacid(s) (co)stabilisers are used. Preferred (co)stabilisers include conventional acid scavengers and known organic stabilisers such as uracils, dihydropyridine, β-aminocrotonates, and β-diketones. In this case, the superacid(s) or metal salt(s) of superacid(s) not only act as a heat and/or colour stabiliser, but they also boost the performance of the (co)stabilisers. It is furthermore noted that the superacid(s) or metal salt(s) of superacid(s) are effective stabilisers in the presence of Zn-containing (co)stabilisation systems. A particularly effective metal salt of a superacid in this respect is (F₃CSO₂)₂NLi.

The superacid(s) or metal salt(s) of superacid(s) can be used as such or in the form of a mixture with one or more conventional further additives to be used in the final resin composition. Preferably, said further additives are inert towards the stabiliser. The use of mixtures may be preferred, since they can facilitate handling and increase dosing accuracy, especially in view of the very small amounts of stabiliser needed. The stabiliser can also be used in combination with a conventional heat and/or colour stabiliser. It can, for example, be incorporated into a conventional liquid stabiliser formulation as used for flexible PVC grades. The pre-blend may also be in the form of a masterbatch, wherein the stabiliser is mixed with the resin in which it can be used. Such a masterbatch suitably contains one or more further additives.

It is noted that one or more of the ingredients of the mixture, pre-blend, or masterbatch can be formed *in situ* by contacting suitable raw materials that form said desired ingredient(s). For example, it can be advantageous to combine a metal source and a superacid with further additives, to form a mixture comprising the metal salt of the superacid. In such case, it can be advantageous to store the mixture for a certain period of time to ensure that enough of the raw materials have reacted.

The final mixtures/pre-blends can be a solid or a liquid formulation, depending on the ingredients used. It may be preferred to produce a conventional liquid stabiliser system comprising one or more of the stabilisers of the present invention. In such a liquid stabiliser system, it may be preferred to make one or more of the ingredients of the liquid stabiliser mixture *in situ* by combining the appropriate raw materials. If such an *in situ* process is used to make mixtures, pre-blends, or masterbatches, preferably at least the stabiliser is produced *in situ.*

It is noted that the amount of stabiliser can be reduced if the resin also comprises one or more metal oxides and/or metal hydroxides, particularly alkali (earth) (hydr)oxides. Ca and/or Zn (hydr)oxides such as Ca(OH)₂ are preferred. Therefore, the use of combinations of the stabiliser and such (hydr)oxides may be preferred. If so, the amount of metal (hydr)oxide used suitably is 0.01-5 parts, preferably 0.05-2 parts, more preferably 0.1-1 parts, all based on 100 parts of resin.

It is noted that no adverse effects are observed when the superacid(s) or metal salt(s) of superacid(s) are combined with natural or synthetic polyols, conventional lubricants and/or conventional inorganic acid scavengers. Examples of inorganic acid scavengers include but are not limited to zeolites and hydrotalcites. Moreover, an advantageous effect towards early colour and long-term colour hold can be observed when the stabilisers according to the invention are combined with conventional stabilisers, which include but are not limited to uracil, β-aminocrotonates, dihydropyridines, and β-ketones.

The metal salts of Bronsted superacids according to the invention can be blended with vinyl halide polymers in order to improve their heat stability. Vinyl halide polymers which can be used are any polymer formed at least in part of the recurring group (-CHX-CH₂-)ₙ and having a halide content in excess of 40%. In this formula, n is the number of units in the polymer chain and X is a halide. Preferably, the polymer is a vinyl chloride polymer (PVC).

It is noted that the term "PVC" as used throughout this document is meant to denominate all (co)polymers comprising vinyl chloride monomeric units, including but not limited to various copolymers and chlorinated vinyl chloride polymers. Preferred are conventional PVC grades that are not chlorinated and typically comprise more than 90% vinyl chloride, as are obtainable by mass, suspension, micro-suspension, and emulsion polymerisation processes. The PVC preferably is not a latex, since that will contain high amounts of emulsifiers. Accordingly, the most preferred vinyl chloride (co)polymers include conventional flexible, semi-rigid, and rigid grades of PVC wherein emulsifying agents are preferably present in a low amount, e.g. to improve the electrical properties of the PVC. Therefore, it is preferred to use PVC obtained by a suspension or mass polymerisation process. Alternatively, PVC from an emulsion polymerisation can be used, provided that it is freed of said undesired emulsifiers.

It is noted that throughout this document the word "parts" means parts by weight and that the abbreviation "phr" is used for the expression "parts per 100 parts of PVC."

### Experimental

### Examples 1-9

Several salts of superacids were tested as heat and/or colour stabilisers in PVC with positive results.
Computational results were obtained using software programs from Accelrys Inc. *Ab initio* calculations were performed with the Dmol program (4.2 version).

Various PVC-containing compositions were prepared, which compositions comprise the following ingredients in their respective amounts:

| | |
|---|---|
| 100 parts by weight | PVC Marvylan^{®} S-6808 ex LVM NV |
| 2 parts by weight | Omyalite^{®} 95 T ex Omya GmbH |
| 0.3 parts by weight | calcium stearate |
| 0.1 parts by weight | Lankromark^{®} LE 384 (anti-oxidant) |
| 0.25 parts by weight | Interwax^{®} GP 02 (paraffin wax) |
| 0.2 parts by weight | Interwax^{®} GP 27 (paraffin wax) |
| 0.4 parts by weight | Interwax^{®} GP 40 (polyethylene wax) |
| 0.15 parts by weight | Interwax^{®} GP 31 (oxidised polyethylene wax) |
| 0.2 parts by weight | Interwax^{®} GP 01 (paraffin wax) |
| 0.2 parts by weight | titanium dioxide Kronos^{®}2220 ex Kronos Titan |
| 0.05 parts by weight | additive as mentioned in Table 1 |

In these compositions various additives having different gas-phase acidity ΔG_{acid} values were used. The additives are tabulated in the Table below.

**Table 1**

| Example | Additive | | gas-phase acidity ΔG_{acid} (kcal/mol) |
|---|---|---|---|
| 1 | Blank | No additive added | |
| 2 | LiTFA | Lithium trifluoroacetate | 316¹ |
| 3 | LiN-(COCF₃)₂ | | 308³ |
| 4 | LiOTf | Lithium trifluoromethane sulphonate | 300³ |
| 5 | LiClO₄ | | 293¹ |
| 6 | LiTFSI | Lithium bis(trifluoromethylsulphonyl) imide | 292¹ |
| 7 | LiBOB | Lithium bis(oxalato)borate | 254¹ |
| 8 | LiSO₃C₈F₁₇ | | n.d.¹ |
| 9 | LiPicrate | | 303¹ |

| | | | |
|---|---|---|---|
| ¹ Gas phase data from Koppel et al., J. Am. Chem. Soc., 1994, 116, 3047-3057. ² Computational data from Koppel et al., J. Am. Chem. Soc., 2000, 122, 5114-5124. ³ Computational data determined according to method of Koppel². ⁴ not determined, but gas-phase acidity ΔG_{acid} value is expected to be lower than that of LiOTf. | | | |

Examples 2, 3, and 6-9 are embodiments of the present invention. It is further noted that the additives of Examples 2-6 and 8 were first dissolved in water before 1 ml of the solution was added to the composition. The additive of Example 7 was added as a 1 ml solution of the additive in ethyl acetate. The additive of Example 9 was added as a solid.

Each composition was made into a sheet by mixing the composition on a two-roll mill for 3.5 minutes after gelation at 205°C. From the sheets obtained samples were cut of approximately 15 mm by 250 mm and having a thickness of 0.5 mm.

Subsequently, the thermal and the colour stability of the samples were determined using a static heat stability test. The static heat stability test was carried out by placing the samples in a Wemer Mathis Thermotester Type LTE-T at 200°C, with the samples being moved through the Thermotester such that their maximum residence time in the Thermotester was 30 minutes.

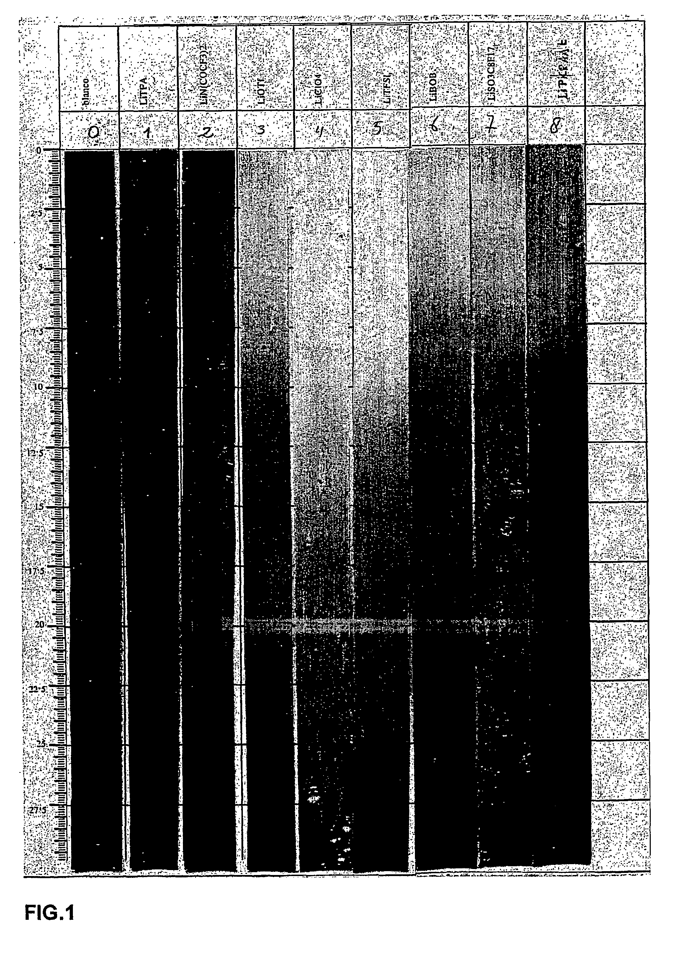

The result of the heat stability test can be seen in the heat stability chart depicted in Figure 1. In the Figure the different examples are indicated on the x-axis and the residence time (in minutes) in the oven is indicated along the y-axis. Note that the numbers 0-8 are used to indicate Examples 1-9, respectively.

For Examples 1-9 the initial colour and the time to discoloration were determined. The initial colour was measured of the part of the sample which came out of the Thermotester first. It was established using a Spectro-pen® (ex Dr. Lange) according to the CIE L*,a*b* method described in DIN-6174. The time to discoloration, which is a measure of the static and the colour stability, was determined by establishing the time in minutes until discoloration appears. The initial colour and the time-to discoloration are shown in Table 2.

The colour of the Examples was measured according to the CIE L*a*b* method described in DIN-6174 using a Minolta® Chromameter. The values L* and a* of the Examples are depicted in Table 2.

Furthermore, the heat stability was determined using the method described in DIN 53381, Part 1, Verfahren A, and expressed as Congo Red values. The Congo Red values of the Examples are shown in Table 2.

**Table 2**

| Example | Sample number in Fig.1 | Initial Colour | L* | a* | Time to discoloration (min) | Initial Colour hold¹ | Congo Red (min,sec) |
|---|---|---|---|---|---|---|---|
| 1 | 0 | dark brown | 37.4 | 21.6 | 0 | - | 6"15' |
| 2 | 1 | dark brown | 41.8 | 23.2 | 0 | - | 11"0' |
| 3 | 2 | dark brown | 41.5 | 23.0 | 0 | - | 9"15' |
| 4 | 3 | orange | 65.9 | 21.2 | 9 | 0 | 10"25' |
| 5 | 4 | yellow | 77.8 | 7.1 | 8 | + | 17"10' |
| 6 | 5 | light yellow | 79.7 | 3.5 | 9 | ++ | 15"0' |
| 7 | 6 | yellow orange | 69.3 | 12.7 | 6 | + | 8"10' |
| 8 | 7 | orange | 65.7 | 20.4 | 7 | 0 | 9"40' |
| 9 | 8 | dark orange | 60.6 | 23.0 | 8 | 0 | 8"25' |

| | | | | | | | |
|---|---|---|---|---|---|---|---|
| ¹ "-" is bad, "0" is moderate, "+" is good, "++" is very good | | | | | | | |

From Figure 1 and Table 2 it can be deduced that Examples 6-9, which are according to the invention, have an improved initial colour, L* value, and a* value over the blank (Example 1). For these Examples also the time to discoloration is prolonged and the initial colour hold is improved when compared to the blank. In particular, Example 6 shows an even improved colour stability (initial colour, L* and a* values, time to discoloration, and initial colour hold) over the conventional stabilisers of Example 4 and 5.
Furthermore, Examples 2-9 show an improved heat stability over the blank.

### Examples 10-18

Various PVC-containing compositions were prepared according to the same method and with the same additives in the same amounts as the compositions of Examples 1-9. In Table 3 the Examples, their corresponding sample numbers, and the additives used are tabulated.

**Table 3**

| Example | Sample no. | Additive |
|---|---|---|
| 1 | 0 | Blank |
| 2 | 1 | LiTFA |
| 3 | 2 | LiN-(COCF₃)₂ |
| 4 | 3 | LiOTf |
| 5 | 4 | LiClO₄ |
| 6 | 5 | LiTFSl |
| 7 | 6 | LiBOB |
| 8 | 7 | LiSO₃C₈F₁₇ |
| 9 | 8 | LiPicrate |

The thermal and the colour stability of the samples were determined using a static heat stability test as described for Examples 1-9, except that the temperature of the Thermostat was 180°C.

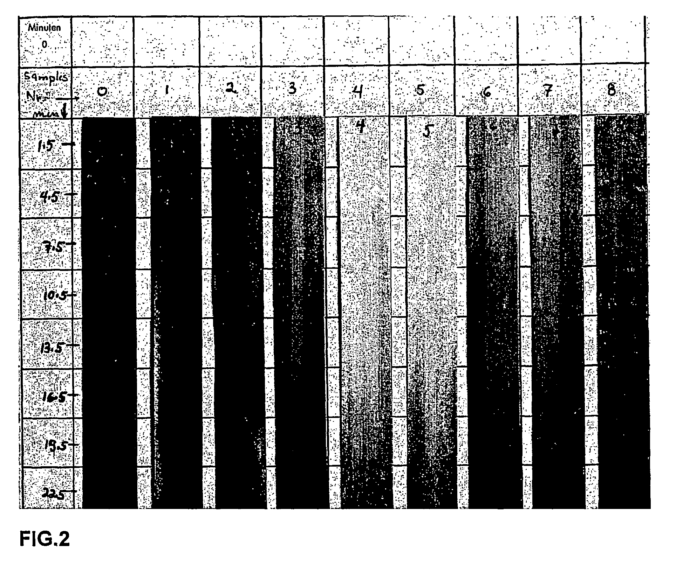

The result of the heat stability test can be seen in the heat stability chart depicted in Figure 2. In the Figure the different examples are indicated on the x-axis and the residence time (in minutes) in the oven is indicated along the y-axis. Note that in Figure 2 the numbers 0-8' are used to indicate Examples 10-18, respectively.

For Examples 10-18 the L* values were determined according to the method described previously for Examples 1-9. The L* values as a function of time in the Thermostat were measured and shown in Table 4 and corresponding Figure 2.

**Table 4**

| Example | Time (min.) | | | | | | | | | |
|---|---|---|---|---|---|---|---|---|---|---|
| | 1.5 | 4.5 | 7.5 | 10.5 | 13.5 | 16.5 | 19.5 | 22.5 | 25.5 | 28.5 |
| 10 | 42.7 | 42.4 | 41.9 | 41.6 | 41.9 | 41.5 | 41.3 | 40.5 | 39.4 | 38.5 |
| 11 | 45.7 | 44.5 | 43.5 | 43.9 | 43.2 | 42.9 | 43.4 | 43.6 | 43.2 | 42.6 |
| 12 | 44.9 | 44.2 | 44.0 | 43.5 | 42.9 | 42.4 | 42.2 | 41.5 | 41.4 | 41.3 |
| 13 | 64.0 | 63.2 | 62.7 | 58.4 | 54.3 | 51.8 | 49.7 | 48.3 | 46.8 | 46.2 |
| 14 | 77.0 | 76.5 | 75.5 | 73.8 | 70.0 | 68.0 | 63.6 | 61.5 | 59.9 | 57.7 |
| 15 | 77.7 | 77.7 | 77.7 | 76.7 | 73.6 | 69.2 | 63.5 | 60.0 | 57.7 | 55.9 |
| 16 | 65.7 | 63.7 | 59.9 | 53.8 | 51.6 | 49.4 | 48.2 | 46.5 | 45.7 | 44.7 |
| 17 | 62.1 | 62.0 | 61.5 | 58.7 | 54.4 | 50.7 | 48.8 | 46.9 | 46.0 | 44.5 |
| 18 | 59.7 | 59.4 | 58.8 | 52.2 | 46.8 | 44.4 | 43.4 | 42.3 | 41.8 | 41.0 |

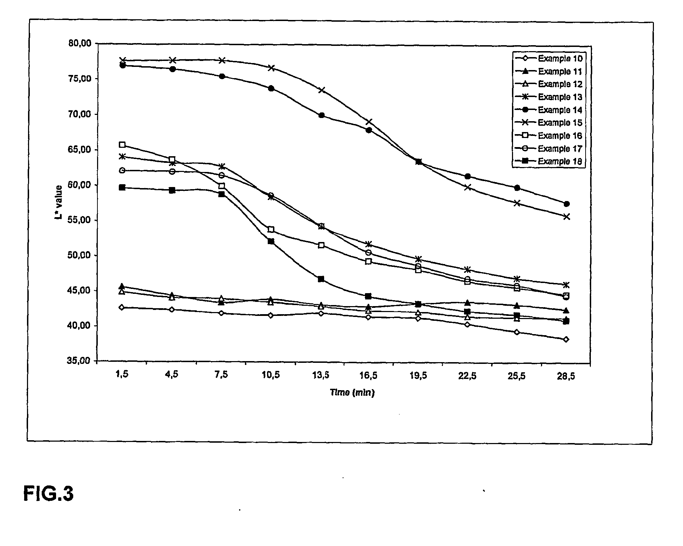

As can be deduced from Figures 2 and 3 and Table 4, Examples 15-18 reveal an improved colour stability.

### Examples 19-26

In Examples 19-26 various compositions were prepared in accordance with the preparation method described for Examples 1-9. In these Examples the state of the additive, viz. a solid or a solution, and the amount added to the PVC-containing mixture were varied (see Table 5). It is noted that the amounts given in Table 5 refer to the total parts by weight of the additive on a dry weight basis, calculated on 100 parts by weight of the PVC (expressed in phr-units). When the additive is added to the PVC-containing mixture in the form of a solution, 1 ml of the solution is added.

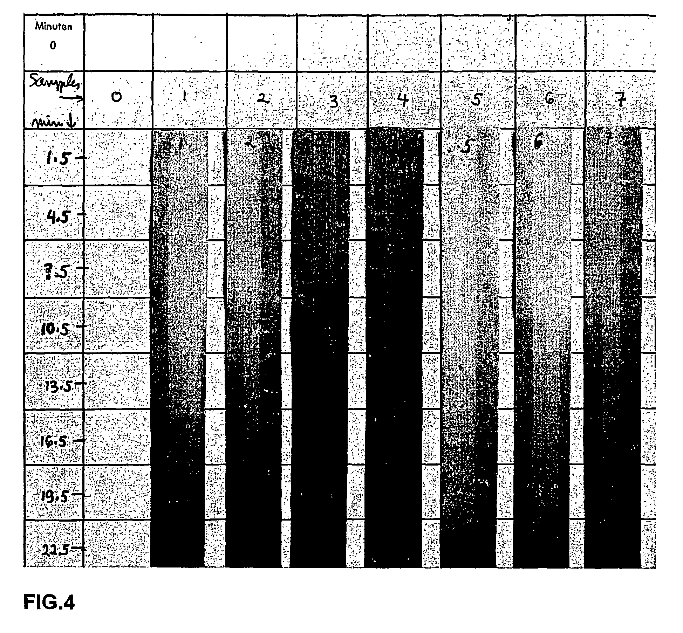

The thermal and the colour stability of the samples were determined using a static heat stability test as described for Examples 1-9. The results are shown in Figure 4.

The initial colour of Examples 19-26 was determined, as well as the heat stability expressed as Congo Red values. The results are shown in Table 5.

**Table 5**

| Example | Sample no. | Additive | Parts (phr) | Initial Colour | Congo Red (min,sec) |
|---|---|---|---|---|---|
| 19 | Blank¹ | | | dark brown | 6"15' |
| 20 | 2 | LiPicrate | 0.05 solid | dark orange | 8"25' |
| 21 | 1 | LiPicrate | 0.05 solution in water | yellow | 11"10' |
| 22 | 7 | Picric acid | 0.05 solid | orange | 7"40' |
| 23 | 2 | Picric acid | 0.05 solution in ethanol | orange | 9"55' |
| 24 | 3 | Picric acid | 0.01 solution in ethanol | orange / dark orange | 8"35' |
| 25 | 4 | Picric acid | 0.005 solution in ethanol | dark orange | 8"20' |
| 26 | 5 | HTFSI³ | 0.05 solution in water | light yellow | 12"40' |
| 27 | 6 | HTFSI³ | 0.005 solution in water | orange , | 10"30' |

| | | | | | |
|---|---|---|---|---|---|
| ¹These values were taken from Example 1 ²These values were taken from Example 9 ³Acid of bis(trifluoromethylsulphonyl) imide | | | | | |

Table 5 and Figure 4 show that the colour stability is improved when adding the additive in the form of a solution instead of a solid. Table 4 furthermore demonstrates that the heat stability of the composition is higher when adding the additive in the form of a solution.

## Claims

1. Use of at least one Brønsted superacid or metal salt of said Brønsted superacid with a gas-phase acidity ΔG_{acid} value of 316 kcal/mol or less, wherein the metal is preferably selected from the group consisting of alkali metals, alkali earth metals, transition metals, lanthanide metals, actinide metals, Al, Ga, In, Tl, Ge, Sn, Pb, and Sb, and wherein the superacid is not a perchlorate, or a compound of the formula 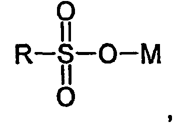 wherein M is a metal, preferably selected from the group consisting of alkali metals, alkali earth metals, Al, and transition elements, and R is selected from the group consisting of substituted, linear or branched, alkyl, cycloalkyl, aryl, alkaryl, and aralkyl moieties, the substituents comprising at least one or more electron-withdrawing groups, as a heat and/or colour stabiliser for polyvinyl halide resin compositions.

2. Use according to claim 1 wherein said superacid has a gas-phase acidity ΔG_{acid} value of less than 312 kcal/mol, preferably less than 307 kcal/mol, and most preferably less than 302 kcal/mol.

3. Use according to claim 1 or 2 wherein the anion of the superacid is selected from the group consisting of carborane anion (CB₁₁H₁₂⁻), partially or fully substituted anions of the type (CB₁₁XₙH₍₁₂₋ₙ₎⁻), wherein each X independently is a halogen, an alkyl group or a halogenated alkyl group, bis(oxalato)borate anion (BOB), (2,4,6-(NO₂)₃C₆H₂O⁻) (picrate anion), linear or cyclic imides of the type (F₂ₙ₊₁CₙSO₂)₂N⁻, fluorinated tetraphenylborates such as tetrakis(3,5-bis(trifluoromethyl)phenyl)borate anion (BArF⁻) or perfluorotetraphenylborate, and polyfluoro-alkoxyaluminate anions.

4. Use according to claim 1 wherein the anion of the superacid is bis(trifluoromethylsulphonyl) imide.

5. Use according to any one of the preceding claims wherein the metal is selected from the group consisting of lithium, sodium, magnesium, calcium, lanthanum, cesium, and barium.

6. Use according to any one of the preceding claims wherein the metal salt of the compound is added to the resin as a mixture with one or more further additives to be used in the final resin composition.

7. Use according to any one of the preceding claims wherein the polyvinyl halide resin is PVC.

8. A stabilised polyvinyl halide resin composition comprising between 0.0001 and 0.95 parts of at least one metal salt of a superacid with a gas-phase acidity ΔG_{acid} value of 316 kcal/mol or less, preferably less than 312 kcal/mol, more preferably less than 307 kcal/mol, and most preferably less than 302 kcal/mol, wherein the metal is preferably selected from the group consisting of alkali metals, alkali earth metals, aluminium, transition metals, lanthanide metals, actinide metals, Al, Ga, In, Ti, Ge, Sn, Pb, and Sb, based on 100 parts of polyvinyl halide resin.

9. A stabilised polyvinyl halide resin composition according to claim 7 wherein' the polyvinylhalide resin is PVC.

## Patentansprüche

1. Verwendung von mindestens einer Bronsted Supersäure oder eines Metallsalzes der Brønsted Supersäure mit einem Wert der Gasphasenacidität ΔG_{Säure} von 316 kcal/mol oder weniger, wobei das Metall bevorzugt aus der Gruppe, die aus Alkalimetallen, Erdalkalimetallen, Übergangsmetallen, Lanthanidmetallen, Actinidmetallen, Al, Ga, In, Tl, Ge, Sn, Pb und Sb besteht, ausgewählt wird, und wobei die Supersäure kein Perchlorat oder eine Verbindung der Formel 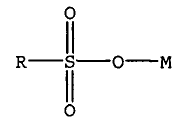 ist, wobei M ein Metal ist, bevorzugt ausgewählt aus der Gruppe, die aus Alkalimetallen, Erdalkalimetallen, Al und Übergangsmetallen besteht, und R aus der Gruppe, die aus substituierten, linearen oder verzweigten Alkyl-, Cycloalkyl-, Aryl-, Alkaryl- und Aralkyl-Einheiten besteht, ausgewählt wird, wobei die Substituenten mindestens eine oder mehrere elektronenziehende Gruppen umfassen, als ein Wärme- und/oder Farbstabilisator für Polyvinylhalogenidharzzusammensetzungen.

2. Verwendung gemäß Anspruch 1, wobei die Supersäure einen Wert der Gasphasenacidität ΔG_{säure} von weniger als 312 kcal/mol, bevorzugt weniger als 307 kcal/mol und am bevorzugtesten weniger als 302 kcal/mol hat.

3. Verwendung gemäß Anspruch 1 oder 2, wobei das Anion der Supersäure aus der Gruppe, die aus Carboran-Anion (CB₁₁H₁₂⁻), teilweise oder vollständig substituierten Anionen des Typs (CB₁₁XₙH₍₁₂₋ₙ₎⁻), wobei jedes X unabhängig ein Halogen ist, einer Alkylgruppe oder einer halogenierten Alkylgruppe, Bis(oxalato)borat-Anion (BOB), (2,4,6-(NO₂)₃C₆H₂O⁻) (Pikratanion), linearen oder cyclischen Imiden des Typs (F₂ₙ₊₁CₙSO₂)₂N⁻, fluorierten Tetraphenylboraten, wie zum Beispiel Tetrakis-(3,5-bis(trifluormethyl)phenyl)borat-Anion (BArF⁻) oder Perfluortetraphenylborat, und Polyfluoralkoxyaluminat-Anionen besteht, ausgewählt wird.

4. Verwendung gemäß Anspruch 1, wobei das Anion der Supersäure Bis(trifluormethylsulfonyl)imid ist.

5. Verwendung gemäß einem der vorangegangenen Ansprüche, wobei das Metall aus der Gruppe, die aus Lithium, Natrium, Magnesium, Calcium, Lanthan, Cäsium und Barium besteht, ausgewählt wird.

6. Verwendung gemäß einem der vorangegangenen Ansprüche, wobei das Metallsalz der Verbindung zu dem Harz als eine Mischung mit einem oder mehreren weiteren Additiven, die in der Endharzzusammensetzung verwendet werden, hinzugegeben wird.

7. Verwendung gemäß einem der vorangegangenen Ansprüche, wobei das Polyvinylhalogenidharz PVC ist.

8. Eine stabilisierte Polyvinylhalogenidharzzusammensetzung, die zwischen 0.0001 und 0.95 Teile bezogen auf 100 Teile Polyvinylhalogenidharz von wenigstens einem Metallsalz einer Supersäure mit einem Wert der Gasphasenacidität ΔG_{Säure} von 316 kcal/mol oder weniger, bevorzugt weniger als 312 kcal/mol, bevorzugter weniger als 307 kcal/mol und am bevorzugtesten weniger als 302 kcal/mol umfasst, wobei das Metall bevorzugt aus der Gruppe, die aus Alkalimetallen, Erdalkalimetallen, Aluminium, Übergangsmetallen, Lanthanidmetallen, Actinidmetallen, Al, Ga, In, Tl, Ge, Sn, Pb und Sb besteht, ausgewählt wird.

9. Eine stabilisierte Polyvinylhalogenidharzzusammensetzung gemäß Anspruch 7, wobei das Polyvinylhalogenidharz PVC ist.

## Revendications

1. Utilisation d'au moins un superacide de Brønsted ou sel de métal du dit superacide de Brønsted ayant une valeur ΔG_{acide} d'acidité en phase gazeuse de 316 kcal/mol ou moins, dans laquelle le métal est de préférence choisi parmi le groupe consistant en les métaux alcalins, les métaux alcalinoterreux, les métaux de transition, les métaux de type lanthanide, les métaux de type actinide, Al, Ga, In, Tl, Ge, Sn, Pb et Sb, et dans laquelle le superacide n'est pas un perchlorate, ou un composé de formule 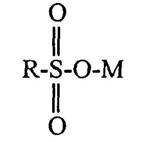 dans laquelle M est un métal, de préférence choisi parmi le groupe consistant en les métaux alcalins, les métaux alcalinoterreux, A1 et les éléments de transition, et R est choisi parmi le groupe consistant en les groupes alkyle, cycloalkyle, aryle, alkaryle et aralkyle substitués, linéaires ou ramifiés, et les substituants comprenant au moins un groupe électro attracteur, en tant que stabilisant à la chaleur et/ou de couleur pour des compositions à base de résine d'halogénure de polyvinyle.

2. Utilisation selon la revendication 1, dans laquelle ledit superacide a une valeur ΔG_{acide} d'acidité en phase gazeuse de moins de 312 kcal/mol, de préférence, de moins de 307 kcal/mol et, le plus préférablement, de moins de 302 kcal/mol.

3. Utilisation selon la revendication 1 ou 2, dans laquelle l'anion du superacide est choisi parmi le groupe consistant en l'anion carborane (CB₁₁H₁₂⁻), les anions partiellement ou complètement substitués du type (CB₁₁XₙH₍₁₂₋ₙ₎⁻), chaque groupe X étant indépendamment un atome d'halogène, un groupe alkyle ou un groupe alkyle halogéné, un anion bis(oxalato)borate (BOB), (2,4,6-(NO₂)₃C₆H₂O⁻) (anion picrate), les imidures linéaires ou cycliques du type (F₂ₙ₊₁CₙSO₂)₂N⁻, et les tétraphénylborates fluorés, tels que l'anion tétrakis(3,5-bis(trifluorométhyl)phényl)borate (BArF⁻) ou perfluorotétraphénylborate, et les anions polyfluoro-alkoxyaluminate.

4. Utilisation selon la revendication 1, dans laquelle l'anion du superacide est l'anion bis(trifluorométhylsulfonyl)imidure.

5. Utilisation selon l'une quelconque des revendications précédentes, dans laquelle le métal est choisi parmi le groupe consistant en le lithium, le sodium, le magnésium, le calcium, le lanthane, le césium et le baryum.

6. Utilisation selon l'une quelconque des revendications précédentes, dans laquelle le sel de métal du composé est ajouté à la résine sous la forme d'un mélange avec un ou plusieurs autres additifs destinés à être employés dans la composition de la résine finale.

7. Utilisation selon l'une quelconque des revendications précédentes, dans laquelle la résine d'halogénure de polyvinyle est le PVC.

8. Composition à base de résine d'halogénure de polyvinyle stabilisée, comprenant de 0,0001 à 0,95 partie d'au moins un sel de métal d'un superacide ayant une valeur ΔG_{acide} d'acidité en phase gazeuse de 316 kcal/mol ou moins, de préférence, de moins de 312 kcal/mol, plus préférablement, de moins de 307 kcal/mol et, le plus préférablement, de moins de 302 kcal/mol, dans laquelle le métal est de préférence choisi parmi le groupe consistant en les métaux alcalins, les métaux alcalinoterreux, l'aluminium, les métaux de transition, les métaux de type lanthanide, les métaux de type actinide, Al, Ga, In, Tl, Ge, Sn, Pb et Sb pour 100 parties de résine d'halogénure de polyvinyle.

9. Composition à base de résine d'halogénure de polyvinyle stabilisée selon la revendication 7, dans laquelle la résine d'halogénure de polyvinyle est le PVC.
